# EUROPEAN PATENT SPECIFICATION

(11) **EP 3 907 441 B1**
(45) Date of publication and mention of the grant of the patent: **16.08.2023**
(21) Application number: 21170942.3
(22) Date of filing: 28.04.2021
(51) Int. Cl.: F24S 20/67, F24S 25/35, F24S 20/00, F24S 25/60

(54) **FASTENING ARRANGEMENT FOR ATTACHING SOLAR PANELS OR GLASS ELEMENTS**
BEFESTIGUNGSANORDNUNG ZUR BEFESTIGUNG VON SOLARPANEELEN ODER GLASELEMENTEN
AGENCEMENT DE FIXATION POUR FIXER DES PANNEAUX SOLAIRES OU DES ÉLÉMENTS EN VERRE

(30) Priority: 05.05.2020 FI 20205458
(43) Date of publication of application: 10.11.2021
(73) Proprietor: Kelo-Marketing Oy, 15700 Lahti (FI)
(72) Inventor: KELO, Toni, 15950 Lahti (FI)
(74) Representative: Berggren Oy

(56) References cited:
- EP-A1- 3 023 558
- JP-A- 2012 149 401
- US-A1- 2016 231 026

## Description

### Field of the invention

The invention relates to the attaching of solar panels or glass elements.

### Prior art

Solar panels are used for solar energy collection. They can be placed for example on roofs or on building walls. Glass elements can also be used in walls and roofs. The glass element is for example a glass plate. Various rails and fasteners are used for example for attaching solar panels to a roof. Depending on the structure of the solar panel, it may also comprise its own frame. Various fastening rails and moldings are used also for attaching glass elements.

US 20160231026 shows a mounting system for frameless solar panels having three parts, a mounting rail and two inserts. EP 3023558 and JP 2012149401 show other known mounting systems for panels.

Problems may arise in the installation properties in current structures, especially when the size or shape of the panels or elements grows or increases. Thus, their manageability in the installation situation requires especially great attention.

### Brief description of the invention

The object of the invention is to achieve a fastening arrangement for solar panels and glass elements, the installation of which fastening arrangement is easier and quicker than in prior art solutions. This is achieved in the manner presented in the independent claim. The dependent claims present different embodiments of the invention.

The fastening arrangement according to the invention comprises a first elongated part for attaching a first panel or element by the first edge area of the panel or element and a second elongated part for attaching a second solar panel by the second edge area of the panel or element.

The first part comprises a level, which has a fastening surface for a fastener. The first part also comprises a protrusion, which is perpendicular to and on the opposite side in relation to the fastening surface, and an oblique protrusion between the level and the protrusion. The oblique protrusion extends further in relation to the protrusion than the edge of the level toward the oblique protrusion. Between the oblique protrusion and the level there is a recess. The second part comprises a fastening protrusion to be set in a recess of the first part and a second level, which has a second fastening surface for a fastener. The second part has a second protrusion, which is perpendicular in relation to the level and on the side of the second fastening surface. The fastening protrusion is in relation to the second protrusion on the opposite side to the level.

Solar panels or glass elements can be installed side by side relatively conveniently, when the fastening arrangement is used on both edge areas of each solar panel or glass element.

### List of figures

In the following, the invention will be described in more detail with reference to the appended figures, in which
- Figure 1: shows an example of a fastening arrangement according to the invention,
- Figure 2: shows an example of the fastening arrangement according to the invention from another angle,
- Figure 3: shows an example of a second part of the fastening arrangement according to the invention,
- Figure 4: shows an example of a first part and a possible third part of the fastening arrangement according to the invention, and
- Figure 5: shows an example of the first part of the fastening arrangement according to the invention.

### Description of the invention

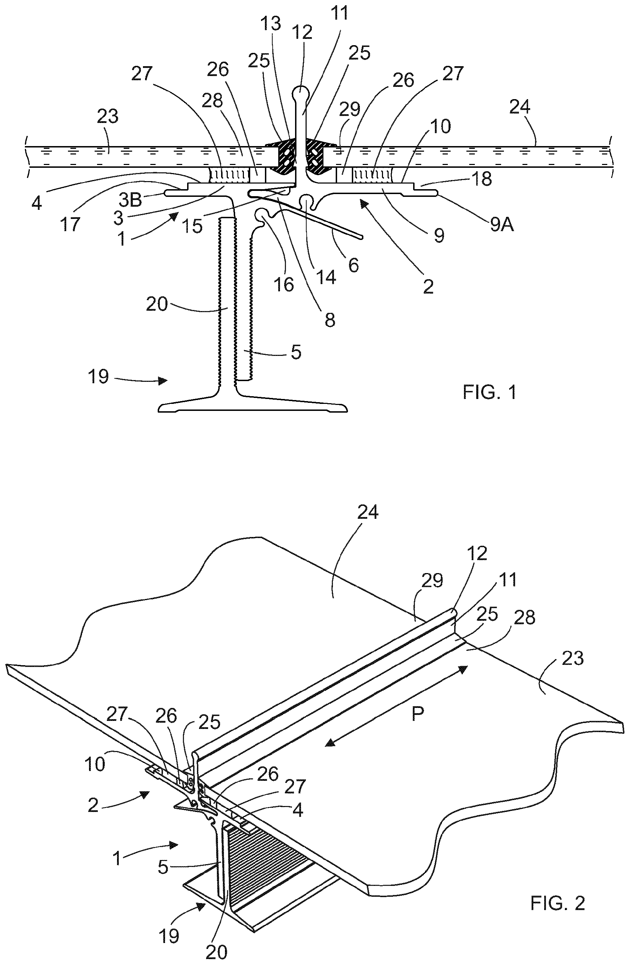

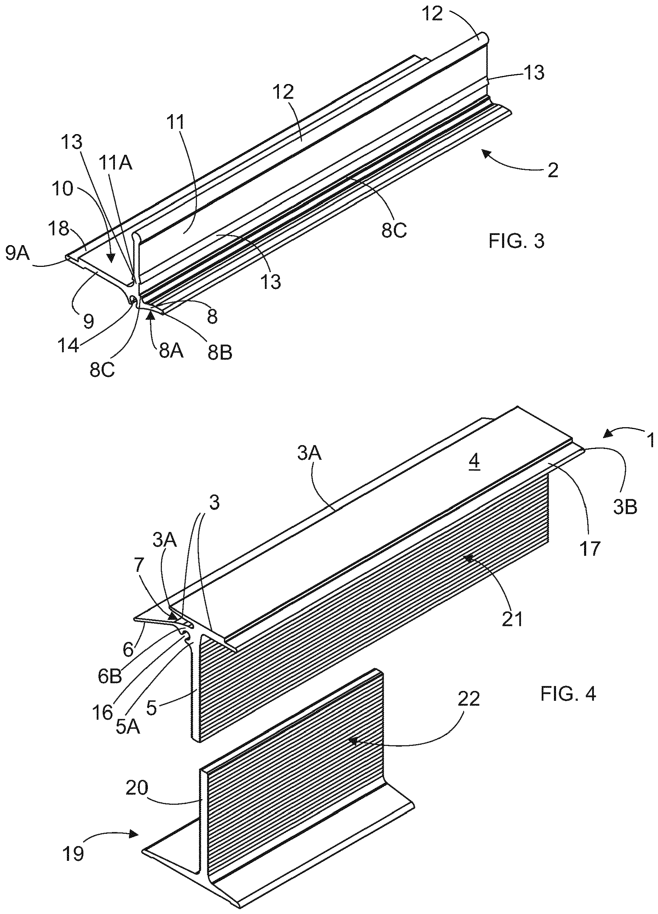

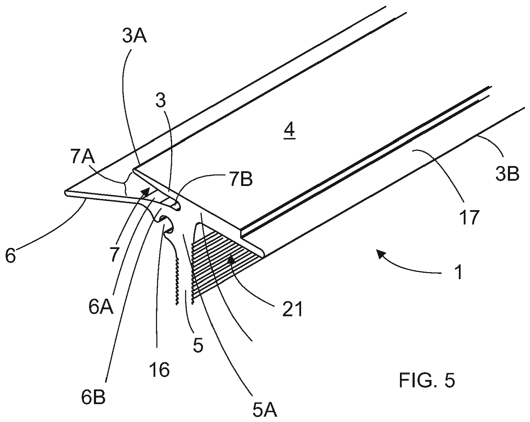

Figure 1 shows an example of a fastening arrangement according to the invention. The fastening arrangement according to the invention comprises a first elongated part 1 for attaching a first solar panel or glass element 23 by the first edge 28 of the solar panel or glass element 23 and a second elongated part 2 for attaching a second solar panel or glass element 24 by the second edge 29 of the solar panel or glass element 24. The first part is shown also in Figures 4 and 5.

The first part 1 comprises a level 3, which has a fastening surface 4 for a fastener. The fastener is for example an adhesive mass or a two-sided tape suitable for the purpose. The first part also comprises a protrusion 5, which is perpendicular to and on the opposite side in relation to the fastening surface 4, and an oblique protrusion 6 between the level 3 and the protrusion 5. The oblique protrusion 6 extends further in relation to the protrusion 5 than the edge 3A of the level 3 toward the oblique protrusion. Between the oblique protrusion 6 and the level 3 there is a recess 7. The second part 2 comprises a fastening protrusion 8 to be set in a recess 7 of the first part 1 and a second level 9, which has a second fastening surface 10 for a fastener. The second part 2 has a second protrusion 11, which is perpendicular in relation to the level 9 and on the side of the second fastening surface 10. The fastening protrusion 8 is in relation to the second protrusion 11 on the opposite side to the level 9.

Figure 2 shows the fastening arrangement from another angle. As already said, the fastener 27 is for example an adhesive mass or a two-sided tape suitable for the purpose. In order to achieve a sufficient fastening strength and durability, there must be at least a certain thickness of for example adhesive mass between the fastener level 3, 9 and the solar panel / glass element. This can be achieved by using a so-called support piece 26 between the fastener level 3, 9 and the solar panel / glass element 23, 24.

From the figures can be seen that the fastening surface 4 and the second fastening surface 10 are arranged to be at the same level when the fastening protrusion 8 is set in the recess 7. Thus, the solar panels or glass elements 23 can be installed on the same level, whereby they form a facade surface or roof surface on the same level. The free end 12 of the second protrusion is arranged to be above the solar panels or glass elements to be attached, which enliven the facade or roof.

The solar panels or glass elements can be installed side by side relatively conveniently, when the fastening arrangement is used on both edge areas 28, 29 of each solar panel or glass element. In the examples of Figures 1 and 2, a first solar panel or glass element 23 has been attached to the first elongated part 1. The fastening is on the first edge area 28 of the first solar panel or glass element 23. Correspondingly, the second elongated part 2 is attached to the second edge area 29 of a second solar panel or glass element 24. The longitudinal direction of the solar panels or glass elements 23, 24 is in the example of the figures the same as the longitudinal direction P of the parts 1, 2, 19 of the fastening arrangement. Thus, the solar panels / glass elements can be attached by their longitudinal edge areas 28, 29 to the fastening arrangement. Each panel/element has a first edge area 28 and a second edge area 29. The figures do not show the second edge area 29 of the first solar panel or glass element 23, which corresponds to the second edge area 29 of the second solar panel or glass element 24 visible in the figures. Correspondingly, the figures do not show the first edge area 28 of the second solar panel or glass element 24, which corresponds to the first edge area 28 of the first solar panel or glass element 23 visible in the figures.

In the example of the figures, it has been assumed that the longitudinal direction of the solar panels or glass elements corresponds to the longitudinal direction P of the fastening arrangement, but attaching is also possible by the shorter edges of the panels / elements, i.e. the first edge areas 28 and second edge areas 29 of the panels / elements are thus on their shorter edges. Solar panels or glass elements are thus installed side by side in relation to the longitudinal direction P of the installation arrangement.

The second part 2 has a second protrusion 11, which is perpendicular in relation to the level 9 and on the side of the second fastening surface 10. The second protrusion 11 aids in aligning the solar panels / glass elements 23, 24 beside each other. The gap between the panels / elements of the second protrusion is sealed for example with a sealing mass or a sealing tape 25. The sealing tape is for example EPDM material. The base 11A of the second protrusion 11 can have at least one gripping shape 13 for the sealing tape 25 or the like on both sides of the second protrusion 11. Additionally, there can be a broadening in the free end 12 of the second protrusion, as is shown in the figures. The second protrusions 11 also enliven a facade or roof surface made up of solar panels or glass elements. Additionally, the second protrusion 11 is arranged to form a fastening base for parts to be attached to the second protrusion. The broadening / thicker part of the free end 12 can be used as part of the fastening solution. For example snow barriers, ladders, access bridges etc. parts can be attached to roofs using the protrusions 11.

As can be seen from the figures, the fastening protrusion 8 of the first part 1 is set in the recess 7 of the second part 2. The fastening protrusion and recess are shaped so that installation is easy and quick. The width of the recess 7 is wider in its mouth area 7A than the width in its rear part 7B.

The fastening protrusion 8 can also be implemented so that it has a concave surface 8A, which is set against a convex surface 6A in the oblique protrusion. The convex surface is thus arranged to settle against the concave surface 8A when setting the fastening protrusion 8 in the recess 7. Additionally, it is possible that a space 15 remains between the level 3 and the fastening protrusion 8 when the fastening protrusion 8 is set in the recess 7. Thus, the end 8B of the fastening protrusion and the base 8C of the fastening protrusion are against the level 3. The space remaining between the end 8B and the base 8C also makes installation easier. Additionally, the oblique protrusion 6 guides the installation of the fastening protrusion 8 of the second part into the recess 7 of the first part, which also makes the installation easier and quicker.

The first parts 1 and second parts 2 can also be installed in succession. In order to make the installation in succession easier, there can be an aligning groove 14 in the second part 2 between the second level 9 and the fastening protrusion 8, which aligning groove is on the opposite side to the second protrusion 11, as for example Figure 1 shows. Correspondingly, there can be a second aligning groove 16 in the first part 1 between the base 5A of the protrusion 5 and the base 6B of the oblique protrusion. For attaching possible auxiliary fasteners or auxiliary supports (e.g. horizontal supports), there can be a notch 17 in the opposite edge 3B of the level 3, and a second notch 18 in the free edge 9A of the second level 9.

The fastening arrangement can further comprise a third part 19, which has a T-shape. The central protrusion 20 of the T-shape is arranged to be set against the protrusion 5 of the first part 1. There can be a gripping shape 21 on the surface of the protrusion 5, and there can be a counter-gripping shape 22 on the surface of the central protrusion 20 of the third part 19. The gripping shape 21 and the counter-gripping shape 22 can in accordance with the example of the figures consist of a grooved surface. The gripping shape 21 and the counter-gripping shape 22 make it easier to align the first part and the third part with each other in a desired manner (e.g. in the direction of the protrusion 5). The third part 10 can be attached to the second part for example with screws or bolts. Even though the first part 1 of the fastening arrangement can be attached directly to the joists of the base (wall or roof), the third part 19 can in some installation targets make the installation easier.

The fastening arrangement according to the invention makes the installation of solar panels and glass elements easier and quicker both on a roof and a wall. The fastening arrangement has clear fastening surfaces 4, 10 and an aligning protrusion 11. Installing the first part 1 and the second part 2 of the fastening arrangement together is quick and effortless. The first and second parts can easily be aligned in succession by using aligning pegs (not shown in the figures) in the aligning grooves 14, 16. The fastening arrangement also enlivens a surface formed of installed solar panels or glass elements.

The fastening arrangement can thus comprise several first elongated parts 1, several second elongated parts 2 and solar panels and/or glass elements / other panels attached to these parts. Thus, the invention also relates to a roof structure or a facade structure (such as a wall structure) achieved with the presented fastening arrangement. A roof structure or facade structure achieved in this manner can easily and quickly be formed. It can comprise areas/surfaces, which are formed by solar panels, and also areas, which are formed by glass elements/other panels. Thus, areas of a roof or facade, where the sun shines without obstacle, can efficiently be utilized for energy production (such as electric power production). Areas, which are in the shade or half-shade are not that efficient for energy production, whereby it is not cost effective to use solar panels in these areas. Still, the formed roof structure or facade have a uniform style and level, which is advantageous for example for servicing or cleaning.

The fastening arrangement according to the invention can be realized in many different ways, as can be discerned from the description above. The material of the fastening arrangement can be some metal suited for the purpose, such as aluminium or stainless steel. Metal, such as aluminium, can also be treated for example by anodizing to make it black. The invention is thus not limited to the examples presented herein, but can be implemented in different ways within the scope of the independent claim.

## Claims

1. A fastening arrangement for attaching solar panels or glass elements,
wherein the fastening arrangement comprises a first elongated part (1) for attaching a first solar panel or glass element (23) by the first edge (28) of the solar panel or glass element (23) and a second elongated part (2) for attaching a second solar panel or glass element (24) by the second edge (29) of the solar panel or glass element (24),
which first part (1) comprises a level (3), which has a fastening surface (4) for a fastener, a protrusion (5) perpendicular to and on the opposite side in relation to the fastening surface (4), and an oblique protrusion (6) between the level (3) and the protrusion (5), which oblique protrusion (6) extends further in relation to the protrusion (5) than the edge (3A) of the level (3) toward the oblique protrusion, and between which oblique protrusion (6) and level (3) there is a recess (7),
which second part (2) comprises a fastening protrusion (8) to be set in the recess (7) of the first part (1), a second level (9), which has a second fastening surface (10) for a fastener, and a second protrusion (11), which is perpendicular in relation to the level (9) and on the side of the second fastening surface (10), and the fastening protrusion (8) is in relation to the second protrusion (11) on the opposite side to the level (9), which fastening surface (4) and second fastening surface (10) are arranged to be on the same level when the fastening protrusion (8) is set in the recess (7), and the free end (12) of which second protrusion is arranged to be above the solar panels or glass elements to be attached.

2. The fastening arrangement according to claim 1, **characterized in that** the width of the recess (7) is wider by its mouth area (7A) than the width at its rear (7B).

3. The fastening arrangement according to claim 2, **characterized in that** the fastening protrusion (8) has a concave surface (8A), and the oblique protrusion has a convex surface (6A), which convex surface is arranged to settle against the concave surface (8A) when setting the fastening protrusion (8) in the recess (7).

4. The fastening arrangement according to claim 3, **characterized in that** a space (15) remains between the level (3) and the fastening protrusion (8), when the fastening protrusion (8) is set in the recess (7), whereby the end (8B) of the fastening protrusion and the base (8C) of the fastening protrusion are against the level (3).

5. The fastening arrangement according to any of the claims 1 - 4, **characterized in that** there is a broadening in the free end (12) of the second protrusion (11).

6. The fastening arrangement according to claim 5, **characterized in that** the second protrusion (11) is arranged to form a fastening base for parts to be attached to the second protrusion.

7. The fastening arrangement according to any of the claims 1 - 6, **characterized in that** there is an aligning groove (14) between the second level (9) and the fastening protrusion (8), on the opposite side in relation to the second protrusion (11).

8. The fastening arrangement according to claim 7, **characterized in that** the first part (1) has a second aligning groove (16) between the base (5A) of the protrusion (5) and the base (6B) of the oblique protrusion (6).

9. The fastening arrangement according to any of the claims 1 - 8, **characterized in that** the base (11A) of the second protrusion (11) has at least one gripping shape (13) on both sides of the second protrusion.

10. The fastening arrangement according to any of the claims 1 - 9, **characterized in that** there is a notch (17) in the opposite edge (3B) of the level (3), and a second notch (18) in the free edge (9A) of the second level (9).

11. The fastening arrangement according to any of the claims 1 -10, **characterized in that** it comprises a third part (19), which has a T-shape, the central protrusion (20) of which shape is arranged to be set against the protrusion (5).

12. The fastening arrangement according to claim 11, **characterized in that** there is a gripping shape (21) on the surface of the protrusion (5), and a counter-gripping shape (22) on the surface of the central protrusion (20) of the third part (19).

13. The fastening arrangement according to any of the claims 1 - 12, **characterized in that** it comprises several first elongated parts (1), several second elongated parts (2) and solar panels and/or glass elements / other panels attached to these parts.

## Patentansprüche

1. Befestigungsanordnung zum Anbringen von Solarpanels oder Glaselementen, wobei die Befestigungsanordnung ein erstes längliches Teil (1) zum Anbringen eines ersten Solarpanels oder Glaselements (23) am ersten Rand (28) des Solarpanels oder Glaselements (23) und ein zweites längliches Teil (2) zum Anbringen eines zweiten Solarpanels oder Glaselements (24) am zweiten Rand (29) des Solarpanels oder Glaselements (24) umfasst,
deren erstes Teil (1) eine Ebene (3) umfasst, die eine Befestigungsoberfläche (4) für ein Befestigungselement, einen Vorsprung (5) senkrecht zu und auf der gegenüberliegenden Seite in Bezug auf die Befestigungsoberfläche (4) und einen schrägen Vorsprung (6) zwischen der Ebene (3) und dem Vorsprung (5) aufweist, dessen schräger Vorsprung (6) sich weiter in Bezug auf den Vorsprung (5) als der Rand (3A) der Ebene (3) hin zu dem schrägen Vorsprung erstreckt, und zwischen dessen schrägem Vorsprung (6) und Ebene (3) es eine Aussparung (7) gibt,
deren zweites Teil (2) einen in die Aussparung (7) des ersten Teils (1) einzusetzenden Befestigungsvorsprung (8), eine zweite Ebene (9), die eine zweite Befestigungsoberfläche (10) für ein Befestigungselement aufweist, und einen zweiten Vorsprung (11) umfasst, der senkrecht in Bezug auf die Ebene (9) und auf der Seite der zweiten Befestigungsoberfläche (10) ist, und der Befestigungsvorsprung (8) sich in Bezug auf den zweiten Vorsprung (11) auf der der Ebene (9) gegenüberliegenden Seite befindet, dessen Befestigungsoberfläche (4) und zweite Befestigungsoberfläche (10) angeordnet sind, um sich auf derselben Ebene zu befinden, wenn der Befestigungsvorsprung (8) in die Aussparung (7) eingesetzt ist, und das freie Ende (12), dessen zweiter Vorsprung angeordnet ist, um sich über den anzubringenden Solarpanels oder Glaselementen zu befinden.

2. Befestigungsanordnung nach Anspruch 1, **dadurch gekennzeichnet, dass** die Breite der Aussparung (7) an ihrem Mündungsbereich (7A) größer ist als die Breite an ihrer Rückseite (7B).

3. Befestigungsanordnung nach Anspruch 2, **dadurch gekennzeichnet, dass** der Befestigungsvorsprung (8) eine konkave Oberfläche (8A) aufweist und der schräge Vorsprung eine konvexe Oberfläche (6A) aufweist, dessen konvexe Oberfläche angeordnet ist, um gegen die konkave Oberfläche (8A) anzuliegen, wenn der Befestigungsvorsprung (8) in die Aussparung (7) gesetzt wird.

4. Befestigungsanordnung nach Anspruch 3, **dadurch gekennzeichnet, dass** ein Zwischenraum (15) zwischen der Ebene (3) und dem Befestigungsvorsprung (8) zurückbleibt, wenn der Befestigungsvorsprung (8) in die Aussparung (7) eingesetzt wird, wodurch das Ende (8B) des Befestigungsvorsprungs und die Basis (8C) des Befestigungsvorsprungs gegen die Ebene (3) liegen.

5. Befestigungsanordnung nach einem der Ansprüche 1-4, **dadurch gekennzeichnet, dass** es eine Verbreiterung am freien Ende (12) des zweiten Vorsprungs (11) gibt.

6. Befestigungsanordnung nach Anspruch 5, **dadurch gekennzeichnet, dass** der zweite Vorsprung (11) angeordnet ist, um eine Befestigungsbasis für Teile zu bilden, die an dem zweiten Vorsprung anzubringen sind.

7. Befestigungsanordnung nach einem der Ansprüche 1-6, **dadurch gekennzeichnet, dass** es eine Ausrichtungsnut (14) zwischen der zweiten Ebene (9) und dem Befestigungsvorsprung (8) auf der in Bezug auf den zweiten Vorsprung (11) gegenüberliegenden Seite gibt.

8. Befestigungsanordnung nach Anspruch 7, **dadurch gekennzeichnet, dass** das erste Teil (1) eine zweite Ausrichtungsnut (16) zwischen der Basis (5A) des Vorsprungs (5) und der Basis (6B) des schrägen Vorsprungs (6) aufweist.

9. Befestigungsanordnung nach einem der Ansprüche 1-8, **dadurch gekennzeichnet, dass** die Basis (11A) des zweiten Vorsprungs (11) mindestens eine Greifform (13) auf beiden Seiten des zweiten Vorsprungs aufweist.

10. Befestigungsanordnung nach einem der Ansprüche 1-9, **dadurch gekennzeichnet, dass** es eine Kerbe (17) in dem gegenüberliegenden Rand (3B) der Ebene (3) und eine zweite Kerbe (18) in dem freien Rand (9A) der zweiten Ebene (9) gibt.

11. Befestigungsanordnung nach einem der Ansprüche 1-10, **dadurch gekennzeichnet, dass** es ein drittes Teil (19) umfasst, das eine T-Form aufweist, dessen Form des zentralen Vorsprungs (20) angeordnet ist, um gegen den Vorsprung (5) eingesetzt zu werden.

12. Befestigungsanordnung nach Anspruch 11, **dadurch gekennzeichnet, dass** es eine Greifform (21) auf der Oberfläche des Vorsprungs (5) und eine Gegengreifform (22) auf der Oberfläche des zentralen Vorsprungs (20) des dritten Teils (19) gibt.

13. Befestigungsanordnung nach einem der Ansprüche 1-12, **dadurch gekennzeichnet, dass** sie mehrere erste längliche Teile (1), mehrere zweite längliche Teile (2) und an diesen Teilen angebrachte Solarpanels und/oder Glaselemente/andere Panels umfasst.

## Revendications

1. Agencement de fixation pour fixer des panneaux solaires ou des éléments en verre, dans lequel l'agencement de fixation comprend une première partie allongée (1) pour fixer un premier panneau solaire ou élément en verre (23) par le premier bord (28) du panneau solaire ou élément en verre (23) et une deuxième partie allongée (2) pour fixer un second panneau solaire ou élément en verre (24) par le second bord (29) du panneau solaire ou élément en verre (24),
laquelle première partie (1) comprend un niveau (3), qui a une surface de fixation (4) pour un élément de fixation, une saillie (5) perpendiculaire à et sur le côté opposé par rapport à la surface de fixation (4), et une saillie oblique (6) entre le niveau (3) et la saillie (5), laquelle saillie oblique (6) s'étend plus loin par rapport à la saillie (5) que le bord (3A) du niveau (3) vers la saillie oblique, et entre laquelle saillie oblique (6) et niveau (3) se trouve un évidement (7),
laquelle deuxième partie (2) comprend une saillie de fixation (8) à placer dans l'évidement (7) de la première partie (1), un second niveau (9), qui présente une seconde surface de fixation (10) pour un élément de fixation, et une seconde saillie (11), qui est perpendiculaire par rapport au niveau (9) et sur le côté de la seconde surface de fixation (10), et la saillie de fixation (8) est en relation avec la seconde saillie (11) sur le côté opposé au niveau (9), laquelle surface de fixation (4) et seconde surface de fixation (10) sont agencées pour être au même niveau lorsque la saillie de fixation (8) est placée dans l'évidement (7), et l'extrémité libre (12) dont la seconde saillie est agencée pour être au-dessus des panneaux solaires ou des éléments en verre à fixer.

2. Agencement de fixation selon la revendication 1, **caractérisé en ce que** la largeur de l'évidement (7) est supérieure par sa zone d'embouchure (7A) à la largeur à son arrière (7B).

3. Agencement de fixation selon la revendication 2, **caractérisé en ce que** la saillie de fixation (8) a une surface concave (8A), et la saillie oblique a une surface convexe (6A), laquelle surface convexe est agencée pour reposer contre la surface concave (8A) lors de la mise en place de la saillie de fixation (8) dans l'évidement (7) .

4. Agencement de fixation selon la revendication 3, **caractérisé en ce qu'**un espace (15) subsiste entre le niveau (3) et la saillie de fixation (8), lorsque la saillie de fixation (8) est placée dans l'évidement (7), moyennant quoi l'extrémité (8B) de la saillie de fixation et la base (8C) de la saillie de fixation sont contre le niveau (3).

5. Agencement de fixation selon l'une quelconque des revendications 1 à 4, **caractérisé en ce qu'**il y a un élargissement dans l'extrémité libre (12) de la seconde saillie (11).

6. Agencement de fixation selon la revendication 5, **caractérisé en ce que** la seconde saillie (11) est agencée pour former une base de fixation pour des parties à fixer à la seconde saillie.

7. Agencement de fixation selon l'une quelconque des revendications 1 à 6, **caractérisé en ce qu'**il y a une rainure d'alignement (14) entre le second niveau (9) et la saillie de fixation (8), sur le côté opposé par rapport à la seconde saillie (11).

8. Agencement de fixation selon la revendication 7, **caractérisé en ce que** la première partie (1) comporte une seconde rainure d'alignement (16) entre la base (5A) de la saillie (5) et la base (6B) de la saillie oblique (6).

9. Agencement de fixation selon l'une quelconque des revendications 1 à 8, **caractérisé en ce que** la base (11A) de la seconde saillie (11) a au moins une forme de préhension (13) des deux côtés de la seconde saillie.

10. Agencement de fixation selon l'une quelconque des revendications 1 à 9, **caractérisé en ce qu'**il y a une encoche (17) dans le bord opposé (3B) du niveau (3), et une seconde encoche (18) dans le bord libre (9A) du second niveau (9).

11. Agencement de fixation selon l'une quelconque des revendications 1 à 10, **caractérisé en ce qu'**il comprend une troisième partie (19), qui a une forme en T, dont la saillie centrale (20) est agencée pour être placée contre la saillie (5).

12. Agencement de fixation selon la revendication 11, **caractérisé en ce qu'**il y a une forme de préhension (21) sur la surface de la saillie (5), et une forme de contre-préhension (22) sur la surface de la saillie centrale (20) de la troisième partie (19).

13. Agencement de fixation selon l'une quelconque des revendications 1 à 12, **caractérisé en ce qu'**il comprend plusieurs premières parties allongées (1), plusieurs deuxièmes parties allongées (2) et des panneaux solaires et/ou des éléments en verre/autres panneaux fixés à ces parties.
